# EUROPÄISCHE PATENTANMELDUNG

(11) **EP 0 602 480 A1**
(43) Veröffentlichungstag der Anmeldung: **22.06.1994**
(21) Anmeldenummer: 93119541.6
(22) Anmeldetag: 03.12.1993
(51) Int. Cl.: H04B 17/00

(54) **Verfahren zur systemgeführten Entstörung von Einrichtungen in Kommunikationssystemen**

(30) Priorität: 15.12.1992 DE 4242323
(71) Anmelder: SIEMENS AKTIENGESELLSCHAFT, D-80333 München (DE)
(72) Erfinder: Löbig, Norbert, Dr. rer. nat., D-64291 Darmstadt (DE)

(57) **Zusammenfassung**

Zeitgemäße Kommunikationssysteme müssen eine extrem hohe Verfügbarkeit aufweisen. Dies bedeutet, daß eine defekte Einrichtung so schnell wie möglich repariert und gewechselt werden muß. Zu diesem Zweck werden auf allen Einrichtungen eine optische Anzeigevorrichtung angebracht, die im Fehlerfall in Abhängigkeit von den Ergebnissen, die eine Fehlerprozedur bereitstellt, angesteuert wird, wobei das Ansteuern der optischen Anzeigevorrichtung die Bedeutung der Zulässigkeit und Notwendigkeit eines Einrichtungswechsels hat und zu jedem Zeitpunkt aktuell ist. Die mit dieser Vorgehensweise verbundenen Vorteile stellen eine schnelle Reparatur des Fehlers sicher und erhöhen damit die Verfügbarkeit des Kommunikationssystems.

## Beschreibung

Die Erfindung betrifft ein Verfahren gemäß dem Oberbegriff des Patentanspruchs 1.

Die Bereitstellung neuer Leistungsmerkmale und Dienste hat zu einer Erhöhung des Komplexitätsgrades zeitgemäßer Kommunikationssysteme geführt. Dies bedeutet, daß ein Kommunikationssystem aus einer Vielzahl von Einrichtungen und die diese steuernden Prozeduren aufgebaut ist, die in ihrem Zusammenwirken untereinander die Steuerung des Kommunikationsflusses und der jeweils angeforderten Dienste bewirken. Meist bestehen derartige Einrichtungen aus mehreren Baugruppen, welche aus technischen Gründen (Abschirmung gegen elektromagnetische Einkopplungen und Abstrahlung, Abführung der Verlustleistung usw.) konstruktiv in geschlossenen Schränken untergebracht sind.

Generell werden an ein Kommunikationssystem andere Anforderungen gestellt als an andere technische Systeme und Anlagen wie beispielsweise Datenverarbeitungsanlagen. So muß ein Kommunikationssystem im Rahmen seiner Kapazitäten jederzeit für alle Teilnehmer verfügbar sein. Aus diesem Grund sind die Baugruppen eines Kommunikationssystems mit großer Fehlerwirkbreite redundant ausgelegt. Dies bedeutet beispielsweise, daß bei Ausfall einer Baugruppe auf eine dazu redundant ausgelegte Baugruppe oder Einrichtung umgeschaltet werden kann, eine redundante Baugruppe oder Einrichtung in Betrieb genommen wird, die defekte Baugruppe als Teil eines überdimensionalen Pools aktiver Baugruppen ohne Service-Einschränkung außer Betrieb genommen werden kann oder die ausgefallenen Funktionen der defekten Baugruppen auf mehrere andere Baugruppen umgeschaltet werden. Die Baugruppe, auf der das Fehlverhalten aufgetreten ist, muß dann gemäß den Herstellerangaben (zum Beispiel innerhalb von drei Stunden dispatch + repair gemäß BELLCORE Forderung) gewechselt und ausgetauscht werden, um die vom Betreiber geforderte und vom Hersteller garantierte Verfügbarkeit des Kommunikationssystems aufrechtzuerhalten. Internationale Normierungsgremien für Kommunikationssysteme/Kommunikationsnetze - beispielsweise CCITT - fordern eine sehr hohe Verfügbarkeit des Systems über die gesamte Lebensdauer.

Diese ist in Form einer Vielfalt von Zuverlässigkeitsparametern und zugehörigen zulässigen Grenzwerten definiert (zum Beispiel vollständige oder partielle Nichtverfügbarkeit des Systems, Nichtverfügbarkeit für Teilnehmer- und Verbindungsleitungen, Fehlerraten für nicht erfolgreiche Belegungsversuche, aufgetrennte/abgebrochene Verbindungen, falsche Vergebührung). Insbesondere darf ein Kommunikationssystem in einer Zeitspanne von zwanzig Jahren - was in der Regel eine typische Lebenszeit eines Kommunikationssystems repräsentiert - höchstens eine Stunde total ausfallen. (BELLCORE-Forderung 3 Minuten pro Jahr, TRMSY/000512). Entsprechend dieser Zuverlässigkeitsanforderungen sind die Komponenten eines Kommunikationssystems i.a. 1:1 oder mindestens m:n redundant ausgeführt.

Um diesen Ansprüchen gerecht zu werden, müssen systeminterne Abläufe und Baugruppen überwacht und eventuell auftretende Fehler frühzeitig erkannt und behoben werden. So müssen die auf den jeweiligen Baugruppen auftretenden Fehler erkannt, erfaßt, in ihrer Dringlichkeit bewertet und in Abhängigkeit von der Bewertung eine Alarmierung des Betreibers zum Zwecke der Behebung des Fehlers gestartet werden. Zu diesem Zweck sind bei zeitgemäßen Kommunikationssystemen in der zentralen Steuereinrichtung Fehlerbehandlungsprozeduren sowie Diagnoseprozeduren implementiert. Die Fehlerbehandlungsprozeduren sind dabei speicherresistent vorhanden, um das Auftreten von Fehlern im System ohne Zeitverzug bearbeiten zu können. Das Auftreten eines Fehlers wird durch kontinuierliche Überwachung, Überwachung bei Aktivität oder Zugriff sowie zyklischem Routinetest der Hardware erkannt. Ferner kann das Auftreten eines Fehlers auf einer Baugruppe im Rahmen eines zyklischen Tests der systeminternen Kommunikationswege, der von den Fehlerbehandlungsprozeduren gestartet wird, erkannt werden, indem in einem zyklischen Zeitraster Nachrichten zu den jeweiligen Baugruppen gesendet werden und die Reaktion der Baugruppen auf diese Nachrichten überprüft wird. Ansonsten reagieren die Fehlerbehandlungsprozeduren auf Fehlermeldungen, die von den Baugruppen selbst im Fehlerfall zur zentralen Steuereinrichtung gesendet werden. Ihre Aufgabe besteht weiterhin darin, schnellstmöglich den aufgetretenen Fehler auf Baugruppen-Anteile bestimmter Baugruppen, auf einzelne Baugruppen oder zumindest auf eine aus wenigen Baugruppen bestehende Gesamtheit von Baugruppen zu lokalisieren. Im folgenden wird dann eine Fehlermeldung im Sinne einer Alarmierung zu einer Bedienerschnittstelle geleitet. Das Bedienpersonal aktiviert daraufhin gegebenenfalls in der zentralen Steuereinrichtung abgelegte Diagnoseprozeduren, sofern dies zur genaueren Lokalisierung des Fehlers auf Baugruppenebene vonnöten ist oder zur Verifizierung des Fehlers vom Hersteller oder Betreiber vorgeschrieben ist. Mit Hilfe dieser Diagnoseprozeduren ist eine exaktere Analyse sowie eine genauere Eingrenzung des aufgetretenen Fehlers möglich, da diese Baugruppen oder Einrichtungen in umfassenderer Weise testen können, als das durch die im laufenden Betrieb arbeitende Fehlererkennung möglich ist. Nach Erkennung und Bewertung des Fehlers erfolgt sofort die Außerbetriebnahme der übergeordneten Einrichtung, der Baugruppe oder eines Teils der Baugruppe sowie gegebenenfalls die Ersatzschaltung von Einrichtungen, Baugruppe oder Funktionen je nach Güte der durch die Fehlerbewertung erzielten Fehlerlokalisierung. Ist die Lokalisierung des aufgetretenen Fehlers auf Baugruppenebene erfolgt, kann die Reparatur des Kommunikationssystems erfolgen, wobei im einfachsten Fall die defekte Baugruppe entnommen und durch eine intakte Baugruppe ersetzt wird. Die einzelnen Baugruppen können im Hinblick auf einfache Entstörabläufe aufgrund von konstruktiven Vorkehrungen durch Ziehen aus dem Baugruppenrahmen entfernt werden bzw. durch Stecken in den Baugruppenrahmen eingeführt werden, ohne daß die Einrichtung eine zentrale oder benachbarte Baugruppe betreffende Montage erfahren muß. Die Entstörung und Behebung der aufgetretenen Fehler im Kommunikationssystem ist hinsichtlich der notwendigen Schritte in einem für diesen Zweck vorgesehenen Wartungshandbuch beschrieben. Hier finden sich alle zur Entstörung eines aufgetretenen Fehlers notwendigen Schritte mitsamt der eventuell zur weiteren Fehlerlokalisierung oder zur Vor- und Nachbereitung eines Baugruppenaustausches erforderlichen Schritte.

Problematisch an einer derartigen Vorgehensweise ist jedoch, daß eine derartige Reparatur mit Fehlerverifizierung, Fehlerlokalisierung und Baugruppentausch zulange dauert und fehlerbehaftet sein kann. Da im Fehlerfall die betreffende Einrichtung Baugruppe, Funktion abgeschaltet wurde, bedeutet dies in der Praxis, daß Einrichtungen/Baugruppen mit hoher Fehlerwirkbreite für die Dauer der Entstörung ohne, oder mit eingeschränkter Redundanz an der Steuerung und Durchschaltung des Kommunikationsflusses im Kommunikationssystem beteiligt sind. Dies bedeutet aber, daß für die Dauer der Entstörung eine weitere Baugruppe, auf die beim Auftreten eines weiteren Fehlerfalles evtl. ersatzgeschaltet werden kann, in dem betroffenen Subsystem, i.a. nicht mehr vorhanden ist. Je nach Dringlichkeit und Schwere des aufgetretenen Fehlers kann dies unter Umständen den Totalausfall des gesamten Kommunikationssystems nach sich ziehen. Um die Zeit der Entstörung durch vereinfachte Handhabung zu beschleunigen, sind in der Regel an einigen Baugruppen des Kommunikationssystems optische Anzeigevorrichtungen angebracht. Dabei ist allerdings zu beachten, daß die Anzeigevorrichtungen gegenwärtig konzeptionell weder in Anzahl, Farbe und Bedeutung im Kommunikationssystem einheitlich verwendet werden, was in der Praxis die Behebung eines Fehlers nicht erleichtert. Ferner ist beim Stand der Technik i.a. die Bedienerschnittstelle an der Behebung des Fehlers beteiligt, was in der Regel bedeutet, daß ein umfangreiches Systemwissen über Bauweise und Lokalisierung der beteiligten Baugruppen erforderlich ist. Weiterhin sind je nach Art und Dringlichkeit des aufgetretenen Fehlers unter Umständen viele Entstörschritte erforderlich, die aufgrund der Vielzahl und des Komplexitätsgrades der möglichen Fehler nicht standardisiert werden können. Mit der hohen Integrationsdichte auf den Baugruppen zeitgemäßer Systeme ist es im Hinblick auf die Fehlertoleranz des Systems, die erhöhte Fehleranfälligkeit hochintegrierter Baugruppen, der zulässigen Höchstzeitdauer für die Entstörung des Systems und des bereitzustellenden Redundanzgrades für Teilsysteme sinnvoll, Baugruppen, welche teilweise defekt werden, in Betrieb zu belassen. Die Entstörung teilweise fehlerhafter Baugruppen erfordert jedoch wiederum vermehrte Aktivitäten des Bedieners an der Bedienerschnittstelle des Systems, namentlich die Sicherstellung und Verifizierung hinreichender Redundanz vor Entstörung, gegebenenfalls die weich erfolgende (Sperre der Vermittlungstechnik) vollständige Außerbetriebnahme der Baugruppe vor Entstörung via Bediener-Interface, da eine noch teilweise in Betrieb befindliche Baugruppe nicht generell ohne Verlust an durchgeschalteten Verbindungen oder Service-Beeinträchtigung gezogen werden kann.

Im Falle defekter Baugruppen in abgesetzten Einheiten kann sogar unter Umständen die Notwendigkeit bestehen, daß die Fehlerlokalisierung und Herstellung der Voraussetzungen zum Baugruppentausch nur durch unterstützende Kommandos über die Bedienerschnittstelle durchgeführt werden kann und das erfolgreiche Beheben des Fehlers ebenfalls nur an der Bedienerschnittstelle sichtbar ist, was in der Praxis eine umfangreiche Kommunikation des Wartungspersonals vor Ort mit dem Bedienpersonal an der Bedienerschnittstelle erfordert. Weiterhin besteht bei der Komplexität der einzelnen Entstörschritte die Möglichkeit, daß aufgrund falscher Interpretation sogar versehentlich Baugruppen unzulässig ausgetauscht werden.

Der Erfindung liegt die Aufgabe zugrunde, Behebung und Entstörung aufgetretener Fehler in einem Kommunikationssystem in praktikabler Weise zu vereinfachen, sie sicherer und bedienerfreundlicher zu machen und damit einhergehend zu beschleunigen, um damit die Totalausfallwahrscheinlichkeit des gesamten Kommunikationssystems zu vermindern und eine Erhöhung der Verfügbarkeit zu erreichen.

Die Erfindung wird durch die im kennzeichnenden Teil des Patentanspruches 1 angegebenen Merkmale gelöst.

Vorteilhaft an der Erfindung ist das Ansteuern einer optischen Anzeigevorrichtung auf der jeweiligen defekten Hardware-Einrichtung, wobei das Ansteuern die Bedeutung eines zulässigen und erforderlichen Baugruppenwechsels hat. Die Ansteuerung erfolgt über eine in der zentralen Steuereinrichtung ablaufende Steuerprozedur, die von einer mehrere Parameter miteinander verknüpfenden Bewertungsprozedur aktiviert wird. Damit wird dem Wartungspersonal signalisiert, welche Hardware-Einrichtung zur Behebung und Entstörung des aufgetretenen Fehlers zu wechseln ist. Die optische Anzeigevorrichtung hat die Bedeutung von Zulässigkeit eines Baugruppenwechsels ohne Befragung des Wartungshandbuchs und ohne Entfaltung von Aktivitäten an der Bedienerschnittstelle. Vorteilhaft an dieser Vorgehensweise ist, daß die Entstörung des aufgetretenen Fehlers beschleunigt wird. Damit wird insbesondere erreicht, daß die Totalausfallwahrscheinlichkeit eines Kommunikationssystems während der Behebung und Entstörung des aufgetretenen Fehlers reduziert wird.

Gemäß Anspruch 2 ist vorgesehen, daß im Falle eines derart gravierend aufgetretenen Fehlverhaltens, daß von der jeweiligen Steuerungseinrichtung keine Fehlermeldung zur zentralen Steuereinrichtung abgesetzt werden kann, das der Hardware-Einrichtung zugehörige Zeitglied bei Ablauf die optische Anzeigevorrichtung automatisch ansteuert. Fällt also eine Baugruppe völlig aus und ist systemseitig nicht mehr ansprechbar, so trägt die auf der Baugruppe befindliche Hardware dafür Sorge, daß die zugehörige optische Anzeigevorrichtung die Bedeutung des zulässigen Baugruppen- bzw. Elementwechsels annimmt. Damit ist der Vorteil verbunden, daß auch bei Nichtabsenden einer Fehlermeldung zur zentralen Steuereinrichtung die optische Anzeigevorrichtung auf der betreffenden Hardware-Einrichtung korrekt angesteuert wird.

Gemäß Anspruch 3 ist vorgesehen, daß, falls die von der zentralen Steuereinrichtung durchgeführte Fehlerverifizierung ergibt, daß die jeweilige Hardware-Einrichtung nur teilweise defekt ist und somit wenigstens ein Submodul noch intakt ist, eine Ersatzschaltung auf einen korrespondierenden Submodul der jeweiligen Hardware-Einrichtung nur für die tatsächlich defekten Submodule durchgeführt wird und die Anzeigevorrichtung der jeweiligen Hardware-Einrichtung in Abhängigkeit davon angesteuert wird, daß zur Ersatzschaltung der auf der defekten Baugruppe noch befindlichen fehlerfreien und aktiven Submodule ausreichend Redundanz vorhanden ist. Wird eine Baugruppe systemseitig nur teilweise außer Betrieb genommen und ist ein Baugruppenwechsel wegen Verfügbarkeit von Redundanz und fehlenden oder akzeptablen Rückwirkungen auf die Durchschaltung und aktivierten Services ohne weitere Aktivitäten an der Bedienerschnittstelle möglich, so nimmt die optische Anzeige ebenfalls die Bedeutung des zulässigen Baugruppenwechsels an. Damit ist der Vorteil verbunden, daß selbst teilweise defekte Baugruppen noch bis zum Baugruppentausch bedingt funktionsfähig bleiben und in einfacher und sicherer Weise schnell entstört werden können, was die Systemverfügbarkeit weiter erhöht.

Gemäß Anspruch 4 ist vorgesehen, daß falls mehrere defekte Hardware-Einrichtungen unter Berücksichtigung einer festgelegten Reihenfolge zu tauschen sind, die jeweilige optische Anzeigevorrichtung einer nachfolgend zu tauschenden Hardware-Einrichtung erst dann angesteuert wird, wenn alle vorher zu tauschenden Hardware-Einrichtungen bereits erfolgreich getauscht wurden und automatisch wieder in Betrieb gegangen sind. Liegen Doppel- und Mehrfachfehlersituationen vor, in welchen die Reihenfolge des Tauschs der Baugruppe eine Rolle spielt, so nimmt die optische Anzeige der Baugruppe, welche jeweils zunächst zu tauschen ist, ebenfalls die Bedeutung des zulässigen Baugruppenwechsels an. Damit ist der Vorteil verbunden, daß das Tauschen der Hardware-Einrichtungen in der richtigen Reihenfolge durchgeführt werden kann ohne komplizierte und fehleranfällige Aktivitäten von seiten des Bedieners an der Bedienerschnittstelle, womit die Verfügbarkeit des Kommunikationssystems weiterhin verbessert werden kann.

Gemäß Anspruch 5 ist vorgesehen, daß sämtliche direkten Ausfall- und Wiederverfügbarkeitsmeldungen des Systems von einer in der zentralen Steuereinrichtung ablaufenden Fehlerbehandlungsprozedur zu einem jederzeit aktuellen Gesamtfehlerbild zusammengefaßt werden und hinsichtlich des zur Entstörung notwendigen Vorgehens gemäß der Wartungsvorschriften des Herstellers bewertet werden. Herangezogen hierzu werden alle durch kontinuierliche Überwachung, Überwachung bei Aktivierung oder Zugriff, zyklische Verifikation eines erkannten Fehlers, zyklische Routinetests der Hardware, Überwachung des Ziehens und Steckens einer Baugruppe sowie zyklische Prüfung der systeminternen Kommunikation der zentralen Steuereinrichtung mit den Baugruppen erzielten Ergebnisse. Das Bewertungsergebnis führt zur systemseitigen Aktualisierung aller optischen Anzeigevorrichtungen der defekten Baugruppen, welche systemseitig ansprechbar sind, bezüglich der Zulässgikeit und Notwendigkeit eines Baugruppentausches. Wird durch einen Tausch einer Baugruppe ein Fehler beseitigt oder beendet sich der Fehlerzustand ohne äußeres Zutun etwa aufgrund dynamischer Einflüsse, so geht die Baugruppe wieder in Betrieb und die optische Anzeige nimmt die Bedeutung des unzulässigen Baugruppen- bzw. Elementwechsels an.

Gemäß Anspruch 6 ist vorgesehen, daß im Falle einer unpräzisen Fehlerlokalisierung durch die Fehlerbehandlungsprozedur eine Diagnoseprozedur über die Bedienerschnittstelle gestartet wird. Vorteilhaft daran ist, daß Fehleranalyse sowie Fehlerlokalisierung über Diagnoseprozeduren in sehr viel genauerem Ausmaße möglich sind und somit anschließend die entsprechende optische Anzeigevorrichtung korrekt angesteuert werden kann. Konnte aus der noch unpräzisen Fehlermeldung des Systems erst nach einer manuell durch den Bediener gestarteten Diagnose die defekte Baugruppe oder teilweise defekte Baugruppe bestimmt werden, so nimmt die optische Anzeigevorrichtung nach dieser Diagnose ebenfalls die Bedeutung des zulässigen Baugruppen- bzw. Elementwechsels an.

Gemäß Anspruch 7 ist vorgesehen, daß bei teilweise defekten, noch in Betrieb befindlichen Baugruppen, für welche keine Redundanz vorhanden ist und folglich gewisse Bedieneraktivitäten, wie das Ausdünnen des Verkehrs auf der Baugruppe, vor Baugruppentausch vorgeschrieben sind, die Ansteuerung der optischen Anzeigevorrichtung zur Anzeige der Zulässigkeit des Baugruppentauschs erst nach Erfülltsein der vorgeschriebenen, über die Bedienerschnittstelle bewirkten Vorbedingung erfolgt. Dies hat ebenfalls den Vorteil noch kürzerer und einfacherer Reparaturvorgänge ohne Notwendigkeit der Kommunikation des Bedieners mit dem Wartungspersonal.

Gemäß Anspruch 8 ist vorgesehen, daß nach Beseitigen des Fehlverhaltens auf der jeweiligen Hardware-Einrichtung das Ansteuern der optischen Anzeigevorrichtung zurückgenommen wird. Vorteilhaft daran ist, daß damit die erfolgreiche Entstörung unmittelbar vor Ort sichtbar ist.

Gemäß Anspruch 9 kann die anhand der Einrichtungen formulierte systemgeführte Entstörung sinngemäß auf einzelne tauschbare Elemente einer Einrichtung sowie auf innerhalb der Vermittlungs- /Übertragungseinrichtung geführte, in Form von Baugruppensteckern realisierte optische Übertragungssysteme zwischen Systemkomponenten Anwendung finden. Hierzu ist die optische Anzeigemöglichkeit am zugehörigen tauschbaren Baugruppenelement bzw. auf den Baugruppensteckern vorzusehen.

Im folgenden wird die Erfindung anhand eines Ausführungsbeispiels näher erläutert.

Es zeigen:
Fig. 1 ein Blockschaltbild der relevanten Teile eines Kommunikationssystems und
Fig. 2 ein Flußdiagramm des erfindungsgemäßen Verfahrens.

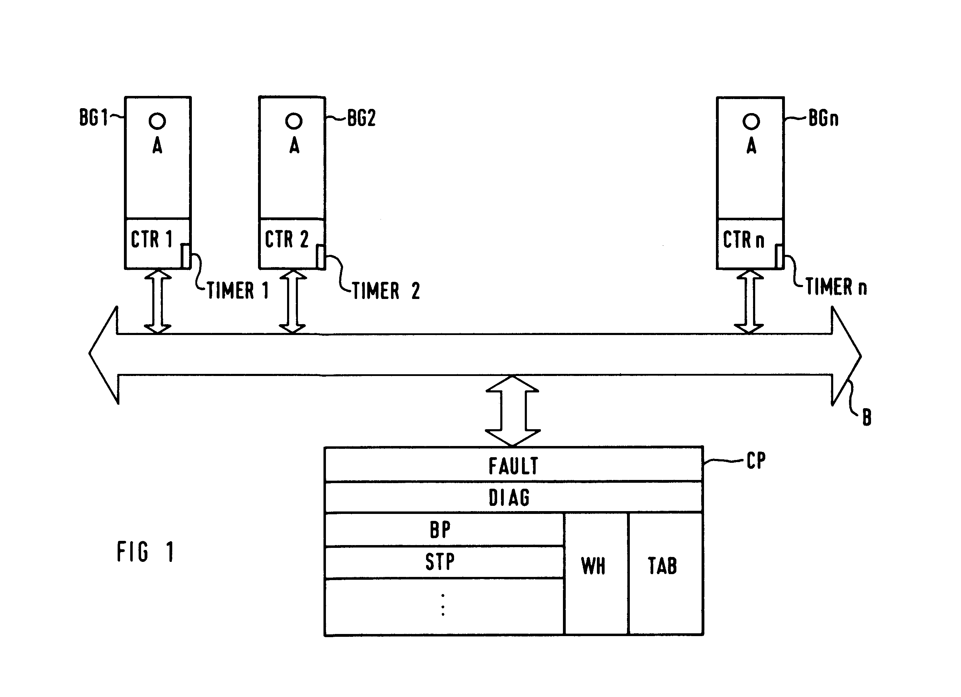

In Fig. 1 ist ein für alle Einrichtungen eines Kommunikationssystems gemeinsames Bussystem B aufgezeigt, welches auch durch ein systemgeführtes Netz von Kommunikationskanälen auf HDLC- oder ATM-Basis erweitert sein kann. Am Bussystem B sind zum einen Hardware-Einrichtungen beispielsweise in Form von Baugruppen BG1 ... BGn und zum anderen eine zentrale Steuereinrichtung CP angeschlossen.

Die Baugruppen BG1 ... BGn sind jeweils mit einer optischen Anzeigevorrichtung A versehen. Diese wird von einer der jeweiligen Baugruppe zugehörigen Baugruppensteuereinrichtung CTR1 ... CTRn gesteuert. Weiterhin ist auf jeder Baugruppe ein Zeitglied TIMER1 ... TIMERn vorgesehen. Die Baugruppensteuereinrichtung CTR1 ... CTRn setzt in einem zyklischen Zeitraster das jeweilige Zeitglied TIMER1 ... TIMERn zurück. Durch ein auf einer der Baugruppen BG1 ... BGn aufgetretenes gravierendes Fehlverhalten kann gegebenenfalls keine Fehlermeldung mehr rechtzeitig von der Baugruppensteuereinrichtung CTR1 ... CTRn der zentralen Steuereinrichtung CP mitgeteilt werden.

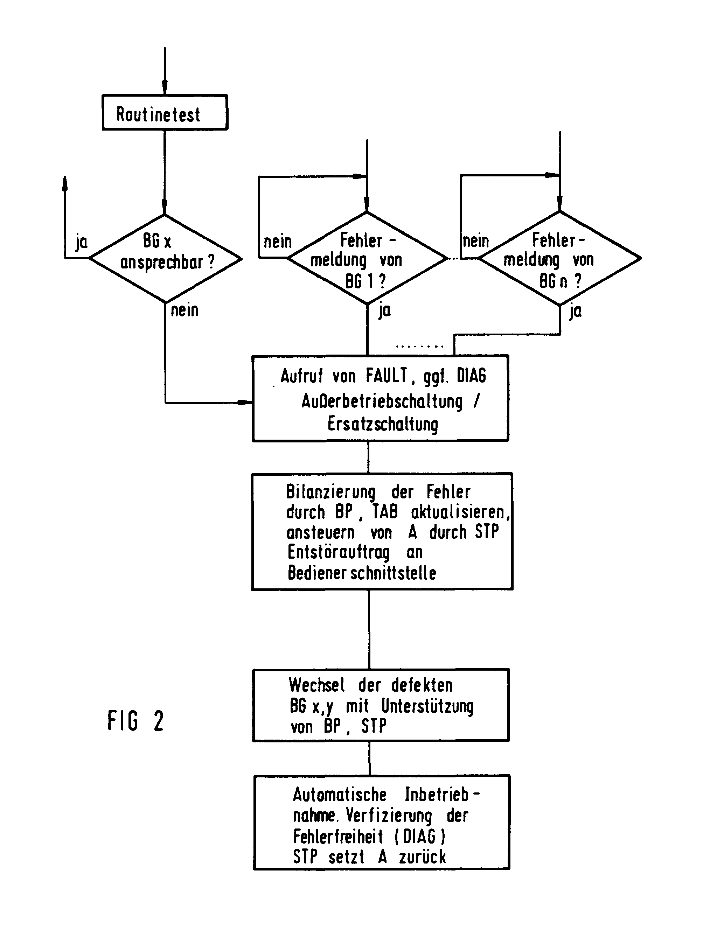

In der Regel ist durch ein derartiges gravierendes Fehlverhalten die Baugruppensteuereinrichtung CTR1 ... CTRn defekt. In diesem Fall läuft das jeweilige Zeitglied TIMER1 .... TIMERn ab und wird von der zugehörigen Baugruppensteuereinrichtung CTR1 ... CTRn nicht mehr zurückgesetzt. Durch den Ablauf des Zeitgliedes wird automatisch die auf der jeweiligen Baugruppe angeordnete optische Anzeigevorrichtung A angesteuert. Sie signalisiert, daß die Baugruppe ein Fehlverhalten aufweist und getauscht werden kann. Diese Vorgänge sind in dem gemäß Fig. 2 aufgezeigten Flußdiagramm erläutert.

Die zentrale Steuereinrichtung CP erkennt z.B. im Rahmen eines zyklischen Routinetests, daß eine oder mehrere Baugruppen BG1 ... BGn ein Fehlverhalten aufweisen. Dies geschieht dadurch, daß eine in der zentralen Steuereinrichtung CP ablaufende Fehlerbehandlungsprozedur FAULT eine Nachricht zyklisch zu jeder der Baugruppen BG1 ... BGn absendet. Falls innerhalb einer definierten Zeitspanne keine Reaktion von seiten der Baugruppen BG1 bis BGn erfolgt, wird dies im Sinne eines Fehlverhaltens interpretiert und eine ebenfalls in der zentralen Steuereinrichtung CP abgelegte Fehlertabelle TAB, die das aktuelle Fehlerbild aller im Kommunikationssystem vorhandenen Baugruppen hat, aktualisiert, was ausschließlich zur korrekten Ansteuerung der optischen Anzeigevorrichtung auf den Baugruppen verwendet wird.

Im folgenden wird gemäß Fig. 2 davon ausgegangen, daß wenigstens eine der Baugruppen BG1 ... BGn nur ein teilweises Fehlverhalten aufweist und somit noch in der Lage ist, eine Fehlermeldung zur zentralen Steuereinrichtung CP abzusenden. In diesem Fall wird umgehend die Fehlertabelle TAB aktualisiert und die Fehlerbehandlungsprozedur FAULT gestartet. In der Regel kann damit der Fehler verifiziert sowie auf wenigstens eine Gruppe von Baugruppen oder die Baugruppe selbst eingegrenzt werden. Ist über die Fehlerbehandlungsprozedur FAULT Art und Ort des aufgetretenen Fehlers ermittelbar, wird mit dieser Information die Fehlertabelle TAB aktualisiert. Da jedoch das Fehlverhalten nicht in jedem Falle analysierbar und lokalisierbar ist, kann der Fall eintreten, daß die Fehlerbehandlungsprozedur FAULT nur eine unpräzise Fehlermeldung zur Bedienerschnittstelle abgibt. In diesem Fall kann dann über die Bedienerschnittstelle eine Diagnoseprozedur DIAG gestartet werden. Über sie ist letztendlich Art und Eingrenzung des aufgetretenen Fehlverhaltens möglich. Im Kommunikationssystem sind unterschiedliche Fehlerkennungsprozeduren FAULT und Diagnoseprozeduren DIAG vorhanden.

Nach Abschluß der Fehlerverifizierungs/Fehlerlokalisierungsvorgänge wird vom System eine Bewertungsprozedur BP gestartet. Hier werden die in der Fehlertabelle TAB abgelegten Fehler bilanziert und in ihrer Dringlichkeit bewertet. Dazu wird von der Bewertungsprozedur BP in einem in der zentralen Steuereinrichtung CP gespeicherten Wartungshandbuch WH der Redundanzgrad der defekten Baugruppe ermittelt. Existiert keine zur defekten Baugruppe redundant ausgelegte Baugruppe, so wird die optische Anzeigevorrichtung A der jeweiligen Baugruppe BG1 ... BGn unterdrückt. Dies signalisiert dem Entstörer vor Ort, daß ein Auswechseln wegen des fehlenden Redundanzgrades nicht möglich ist. Der Entstörer muß dann gegebenenfalls über die Bedienerschnittstelle die jeweilige Baugruppe BG1 ... BGn schrittweise außer Betrieb nehmen. (Verkehr "ausdünnen") Falls jedoch der Redundanzgrad der defekten Baugruppe BG1 ... BGn größer als 1 ist, wird eine Steuerprozedur STP aktiviert, die die jeweilige optische Anzeigevorrichtung A ansteuert. Da im vorliegenden Fall von der jeweiligen Baugruppe eine Fehlermeldung zur zentralen Steuereinrichtung CP abgesendet wurde, bedeutet dies, daß die jeweilige Baugruppe noch ansprechbar ist. Dies kann bedeuten, daß auf der Baugruppe angebrachte Submodule S1 ... Sk zumindest teilweise noch intakt sind. In diesem Fall wird von der zentralen Steuereinrichtung CP ein Ersatzschalten der defekten Submodule auf Submodule der redundanten Baugruppen durchgeführt.

Im folgenden wird nun davon ausgegangen, daß eine redundante Baugruppe BG1 ... BGn noch während des Entstörvorgangs ebenfalls vollständig defekt wird. In diesem Fall sorgt die Bewertungsprozedur BP dafür, daß die Anzeigevorrichtung der zunächst defekt gegangenen Baugruppe BG1 ... BGn wieder zurückgenommen wird und im folgenden die optische Anzeigevorrichtung A der neuerlich defekt gegangenen Baugruppe angesteuert wird. Dies signalisiert dem Entstörer, daß diese Baugruppe zunächst gewechselt werden muß. Nach dem Wechseln wird eine automatische Wiederinbetriebnahme durchgeführt, und automatisch die Diagnoseprozedur DIAG gestartet, um die Fehlerfreiheit dieser Baugruppe zu verifizieren. Bei erfolgreicher Wiederinbetriebnahme wird die Steuerprozedur STP von der logische Verknüpfungen durchführende Bewertungsprozdedur BP veranlaßt, das Ansteuern der optischen Anzeigevorrichtung A dieser Baugruppe wieder zurückzunehmen und gleichzeitig die optische Anzeigevorrichtung A der ursprünglich defekt gegangenen Baugruppe wieder anzusteuern. Dies bedeutet für den Entstörer, daß nun diese Baugruppe zu wechseln ist.

## Patentansprüche

1. Verfahren zur systemgeführten Entstörung von Einrichtungen in Kommunikationssystemen mit
- einer zentralen Steuereinrichtung (CP), in der wenigstens eine Fehlerbehandlungsprozedur (FAULT) sowie wenigstens eine Diagnoseprozedur (DIAG) ablaufen, und
- Hardware-Einrichtungen, insbesondere Baugruppen (BG1 ... BGn), mit jeweils einer Steuereinrichtung (CTR1 ... CTRn), jeweils einem, von derselben gesteuerten Zeitglied (TIMER1 ... TIMERn) sowie gegebenenfalls mehreren in der jeweiligen Hardware-Einrichtung (BG1 ... BGn) befindlichen Submodulen (S1 ... Sk), wobei die Hardware-Einrichtungen (BG1 ... BGn) derjenigen, von in der zentralen Steuereinrichtung (CP) ablaufenden Fehlerbehandlungsprozedur (FAULT) bzw. Diagnoseprozedur (DIAG) zur Verifizierung ihres Betriebszustandes angesteuert werden,
dadurch gekennzeichnet,
daß bei Auftreten eines Fehlverhaltens auf wenigstens einer der Hardware-Einrichtungen (BG1 ... BGn) von der dieser zugehörigen Steuerungseinrichtung (CTR1 ... CTRn) eine Fehlermeldung zur zentralen Steuereinrichtung (CP) gesendet wird,
woraufhin von dieser eine Fehlerverifizierung/Fehlerlokalisierung durchgeführt und mit der dadurch erhaltenen Information zum einen ein in einer Fehlertabelle (TAB) abgespeichertes aktuelles Fehlerbild aller im Kommunikationssystem vorhandenen Hardware-Einrichtungen (BG1 ... BGn) aktualisiert und zum anderen eine Alarmmeldung zur Bedieneroberfläche gesendet wird,
daß mit der erhaltenen Information von einer in der zentralen Steuereinrichtung (CP) ablaufenden Bewertungsprozedur (BP) Parameter eines dort abgespeicherten Wartungshandbuchs (WH), insbesondere diejenigen, die Auskunft über den aktuellen Redundanzgrad der defekten Hardware-Einrichtung geben, ermittelt und logisch mit den für das aktuelle Fehlerbild repräsentativen Parametern verknüpft werden,
daß in Abhängigkeit vom Resultat der Verknüpfung eine Steuerprozedur (STP) initialisiert wird, durch welche eine optische Anzeigevorrichtung (A), die die Bedeutung der Zulässigkeit eines Baugruppenwechsels hat, auf den jeweiligen Hardware-Einrichtung angesteuert wird, und
daß nach dem Wechsel der defekten Hardware-Einrichtung sowie einer automatischen Inbetriebnahme durch die zentrale Steuereinrichtung (CP) eine automatische Verifizierung der Fehlerfreiheit durchgeführt sowie die Aktualisierung der optischen Anzeigevorrichtung (A) durch die Steuerprozedur (STP) vorgenommen wird.

2. Verfahren nach Anspruch 1, dadurch gekennzeichnet, daß, falls das aufgetretene Fehlverhalten einer Hardware-Einrichtung derart gravierend ist, daß von der zugehörigen Steuerungseinrichtung (CTR1 ... CTRn) keine Fehlermeldung abgesetzt werden kann, das von dieser gesteuerte Zeitglied (TIMER1 ... TIMERn) bei einem Zeitablauf die optische Anzeigevorrichtung (A) ansteuert und das Fehlverhalten der betreffenden Hardware-Einrichtung (BG1 ... BGn ) von der zentralen Steuereinrichtung (CP) her zumindest durch einen von derselben zyklisch gestarteten Routinetest zur Aktualisierung des systemweiten Fehlerbildes erkannt wird.

3. Verfahren nach Anspruch 1 oder 2, dadurch gekennzeichnet, daß, falls die von der zentralen Steuereinrichtung (CP) durchgeführte Fehlerverifizierung ergibt, daß die jeweilige Hardware-Einrichtung (BG1 ... BGn) nur teilweise defekt und somit wenigstens ein Submodul (S1 ... Sk) noch intakt ist, für die defekten Submodule ein Ersatzschalten auf einen korrespondierenden Submodul (S1 ... Sk) der jeweiligen Hardware-Einrichtung (BG1 ... BGn) erfolgt und die Anzeigevorrichtung (A) der teilweise defekten Hardware-Einrichtung (BG1 ...BGn) angesteuert wird in Abhängigkeit davon, ob zur Ersatzschaltung der verbleibenden nicht defekten Submodule der zeitweisen defekten Hardware-Einrichtung noch ausreichend Redundanz besteht.

4. Verfahren nach Anspruch 1, 2 oder 3, dadurch gekennzeichnet, daß, falls mehrere defekte Hardeware-Einrichtungen (BG1 ... BGn) unter Berücksichtigung einer festgelegten Reihenfolge zu tauschen sind, die jeweilige optische Anzeigevorrichtung (A) einer nachfolgend zu tauschenden Hardeware-Einrichtung erst dann angesteuert wird, wenn alle vorher zu tauschenden Hardware-Einrichtungen bereits erfolgreich getauscht wurden.

5. Verfahren nach einem der vorhergehenden Ansprüche, dadurch gekennzeichnet, daß sämtliche direkten und per routinemäßiger Überwachung erhaltenen Ausfall- und Wiederverfügbarkeitsmeldungen des Systems zu einem jederzeit aktuellen, globalen Gesamtfehlerbild zusammengefaßt werden und hinsichtlich der zur Entstörung des Gesamtsystems vorgeschriebenen Vorgehensweise bewertet werden, worauf die systemseitige Ansteuerung der optischen Anzeigevorrichtungen (A) der defekten Einrichtungen (BG1 bis BGn) erfolgt, welche zum einen systemseitig ansprechbar sind und zum andern ohne zusätzliche Bediener- und Entstöraktivitäten sofort entstört werden können.

6. Verfahren nach einem der vorhergehenden Ansprüche, dadurch gekennzeichnet, daß im Falle einer unpräzisen Fehlerlokalisierung durch die jeweilige Fehlerbehandlungsprozedur (FAULT) eine der gegebenenfalls mehrfach vorhandenen Diagnoseprozeduren (DIAG) gestartet und anschließend die korrekte Ansteuerung der optischen Anzeigevorrichtung (A) vorgenommen wird.

7. Verfahren nach einem der vorhergehenden Ansprüche, dadurch gekennzeichnet, daß für nur teilweise defekte Hardware-Einrichtungen (BG1, ..., BGn), für welche keine Redundanz vorhanden ist, erst nach dem Erfülltsein der zur Entstörung vorgeschriebenen Bedieneraktivitäten die Ansteuerung der optischen Anzeigevorrichtung (A) vorgenommen wird.

8. Verfahren nach einem der vorhergehenden Ansprüche, dadurch gekennzeichnet, daß nach Beseitigen des Fehlverhaltens auf der jeweiligen Hardware-Einrichtung (BG1 ... BGn) das Ansteuern der zugehörigen optischen Anzeigevorrichtung (A) zurückgenommen wird.

9. Verfahren nach einem der vorhergehenden Ansprüche, dadurch gekennzeichnet, daß die optische Anzeigevorrichtung (A) für einzeln tauschbare Elemente einer Einrichtung sowie für in Form von Baugruppen-Steckern realisierte Übertragungssysteme zwischen den Systemkomponenten des Kommunikationssystems vorgesehen wird und sinngemäß zur Anwendung kommt.
